# EUROPEAN PATENT APPLICATION

(11) **EP 3 136 144 A1**
(43) Date of publication of application: **01.03.2017**
(21) Application number: 15782474.9
(22) Date of filing: 22.04.2015
(51) Int. Cl.: G02B 6/24

(54) **OPTICAL FIBER CONNECTION STRUCTURE**

(30) Priority: 22.04.2014 JP 2014088455
(71) Applicant: Fujikura Ltd., Tokyo 135-8512 (JP); Nippon Telegraph and Telephone Corporation, Tokyo 100-8116 (JP)
(72) Inventor: MATSUDA Takaharu, Sakura-shi Chiba 285-8550 (JP); YAMAGUCHI Takashi, Sakura-shi Chiba 285-8550 (JP); TAKIZAWA Kazuhiro, Sakura-shi Chiba 285-8550 (JP); YONEDA Keisuke, Musashino-shi Tokyo 180-8585 (JP); TAKAMIZAWA Kazutoshi, Musashino-shi Tokyo 180-8585 (JP); AOYAGI Yuji, Musashino-shi Tokyo 180-8585 (JP); NAKAYACHI Katsushi, Musashino-shi Tokyo 180-8585 (JP)
(74) Representative: Cabinet Plasseraud
(86) International application number: PCT/JP2015/062197
(87) International publication number: WO 2015/163348

(57) **Abstract**

An optical fiber splicing structure of the invention includes: an optical fiber connector that is capable of holding an optical fiber at both sides thereof in a radial direction; a receiving optical fiber that is provided inside the optical fiber connector and has a hole opening at an end face of a connection end thereof; a solid refractive index matching layer that is formed at the end face of a connection end of the receiving optical fiber and enters the hole; and an external optical fiber that is to be butt-jointed to the receiving optical fiber by being butt-jointed to the receiving optical fiber at the end faces thereof with the refractive index matching layer interposed therebetween.

## Description

### TECHNICAL FIELD

The present invention relates to an optical fiber splicing structure including an optical fiber connector, such as a field assembly type optical connector or a mechanical splice.

This application claims priority from Japanese Patent Application No. 2014-088455 filed on April 22, 2014, the contents of which are incorporated herein by reference in their entirety.

### BACKGROUND

Conventionally, optical fiber connectors that can carry out assembling work of optical fibers at the workplace of the connection therefor are known. This type of optical fiber connector holds and fixes a connection portion, at which an end face of an external optical fiber inserted from the rear is butt-jointed to an end face of a receiving optical fiber inserted in advance, at both sides of the connection portion in a radial direction, thereby maintaining a connected state between the optical fibers to constitute an optical fiber splicing structure.

A technique of interposing a solid refractive index matching layer in a butt-jointed portion between the optical fibers in order to reduce connection loss is known. As methods of forming the solid refractive index matching layer, there is a method (for example, Patent Document 1) of sandwiching a refractive index matching material cured in advance between end faces of the optical fibers, a method of coating and curing a refractive index matching material in a liquid state on an end face of one optical fiber and then butt-jointing the other optical fiber to the one optical fiber, or the like.

### PRIOR ART DOCUMENTS

### PATENT DOCUMENT

[Patent Document 1] Japanese Unexamined Patent Application, First Publication No. 2009-42335

### SUMMARY OF INVENTION

### PROBLEMS TO BE SOLVED BY THE INVENTION

In the case where the refractive index matching material cured in advance is sandwiched between the end faces of the optical fibers, a support member that is used to hold the refractive index matching material is required. Therefore, there is a concern that the structure near the connection portion may become complicated.

In the case where the refractive index matching material in a liquid state is coated and cured on the end face of the optical fiber to form the refractive index matching layer, there is a problem that the refractive index matching layer easily peel off from the end faces of the optical fibers. If peeling of the refractive index matching layer occurs, there is a concern that the connection loss may increase. Consequently, when assembling the optical fiber splicing structure to connect the optical fibers to each other, careful handling is required so that the refractive index matching layer does not peel off. For this reason, it is difficult to carry out the process of assembling the optical fiber splicing structure.

Additionally, in order to inhibit the refractive index matching layer from peeling from the end faces of the optical fibers, it is necessary to use a refractive index matching layer with a strong adhesive strength, and there is a limitation to selection of the refractive index matching layer.

The invention was made with respect to the above-described problems, and an object thereof is to provide an optical fiber splicing structure which does not require a complicated structure and from which peeling of a refractive index matching layer does not occur easily in an assembling process.

### MEANS FOR SOLVING THE PROBLEMS

An optical fiber splicing structure according to an aspect of the invention includes: an optical fiber connector that is capable of holding an optical fiber at both sides thereof in a radial direction; a receiving optical fiber that is provided inside the optical fiber connector and has a hole opening at an end face of a connection end thereof; a solid refractive index matching layer that is formed at the end face of the connection end of the receiving optical fiber and enters the hole; and an external optical fiber that is to be butt-jointed to the receiving optical fiber by being butt-jointed to the receiving optical fiber at the end faces thereof with the refractive index matching layer interposed therebetween.

Additionally, it is preferable that an entering depth of the refractive index matching layer that enters the hole be 50 µm or less from an end face of the connection end of the receiving optical fiber.

Additionally, the receiving optical fiber may be a holey fiber in which the hole is formed over the entire length of the receiving optical fiber.

Additionally, the receiving optical fiber may include: a non-hole portion that does not include holes; and a hole portion that is located closer to a connection end than the non-hole portion and has the hole extending from an end face of the connection end.

Additionally, the hole portion may be provided in a region of 4 mm or less from an end face of the connection end.

Additionally, it is preferable that a shore E hardness and a thickness of the refractive index matching layer be within a range bounded by (shore E hardness: 6 and thickness: 20 µm), (shore E hardness: 85 and thickness: 20 µm), (shore E hardness: 85, thickness: 40 µm), (shore E hardness: 30 and thickness: 60 µm), and (shore E hardness: 6 and thickness: 60 µm).

Additionally, the external optical fiber may be a holey fiber, and the shore E hardness of the refractive index matching layer may be within a range of 45 to 80.

Additionally, the optical fiber connector may be a mechanical splice that includes: a base element and a lid element that are arranged to face each other and sandwich the receiving optical fiber and the external optical fiber therebetween; and a clamp spring that elastically applies a force to the base element and the lid element in a direction in which the base element and the lid element become closer to each other.

Additionally, the optical fiber connector may be an optical connector that includes: a ferrule including the receiving optical fiber inserted thereinto and fixed thereto; a base element and a lid element that are provided on a rear side of the ferrule, are arranged to face each other, and sandwich the receiving optical fiber and the external optical fiber therebetween; and a clamp spring that elastically applies a force to the base element and the lid element in a direction in which the base element and the lid element become closer to each other.

### Effects of the Invention

Connection loss can be reduced by providing the solid refractive index matching layer on the end face of the connection end of the receiving optical fiber and butt-jointing the receiving optical fiber and the external optical fiber to each other with the solid refractive index matching layer interposed therebetween.

Additionally, the receiving optical fiber has the hole that extends in the longitudinal direction from the end face of the connection end, and the solid refractive index matching layer enters this hole. Accordingly, the entering portion exhibits an anchoring effect, and the refractive index matching layer is less likely to peel off from the end face of the receiving optical fiber.

In addition, the solid refractive index matching layer can function to block the hole of the receiving optical fiber, preventing moisture or the like from entering this hole, and inhibiting degradation of the optical properties of the optical fibers.

### BRIEF DESCRIPTION OF THE DRAWINGS

FIG. 1 is a perspective view showing an optical fiber splicing structure according to a first embodiment.
FIG. 2 is an exploded perspective view showing the optical fiber splicing structure according to the first embodiment.
FIG. 3 is a longitudinal cross-sectional view showing the optical fiber splicing structure according to the first embodiment.
FIG. 4 is a cross-sectional view showing an example of a holey fiber.
FIG. 5 is a longitudinal cross-sectional view showing the periphery of an end face of a connection end of a receiving optical fiber.
FIG. 6 is an enlarged view showing a state of the connection portion between the receiving optical fiber and an external optical fiber.
FIG. 7 is an explanatory diagram showing a preferable range of the physical properties of a refractive index matching layer used in the optical fiber splicing structure according to the first embodiment.
FIG. 8 is an enlarged view showing a state of a connection portion between the receiving optical fiber and the external optical fiber in the optical fiber splicing structure of a modified example of the first embodiment.
FIG. 9 is an exploded perspective view showing an optical fiber splicing structure according to a second embodiment.
FIG. 10 is a longitudinal cross-sectional view showing the optical fiber splicing structure according to the second embodiment.
FIG. 11 is a plan view showing a modified example of the second embodiment and an example in which a receiving optical fiber having a hole portion and a non-hole portion is adopted.

### EMBODIMENTS FOR CARRYING OUT THE INVENTION

Hereinafter, embodiments of the invention will be described with reference to the respective drawings. X-Y-Z coordinate systems are described in the respective drawings. In the present specification, a description will be performed with respective directions being defined along these coordinate systems. In addition, in the drawings to be used in the following description, characteristic portions may be shown in an enlarged manner for convenience in order to make characteristics easily understood, and the dimension scales or the like of respective constituent elements are not necessarily the same as the actual dimension scales.

### (First Embodiment)

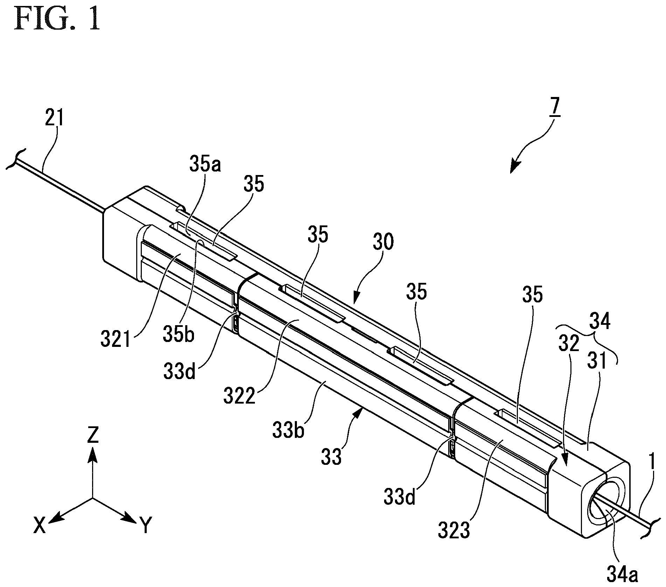

FIGS. 1 to 3 are explanatory views showing an optical fiber splicing structure 7 (splicing structure 7) according to a first embodiment of the invention. The splicing structure 7 has a mechanical splice 30 (hereinbelow, a splicer 30) serving as an optical fiber connector, and a receiving optical fiber 21 and an external optical fiber 1 that are held by the splicer 30.

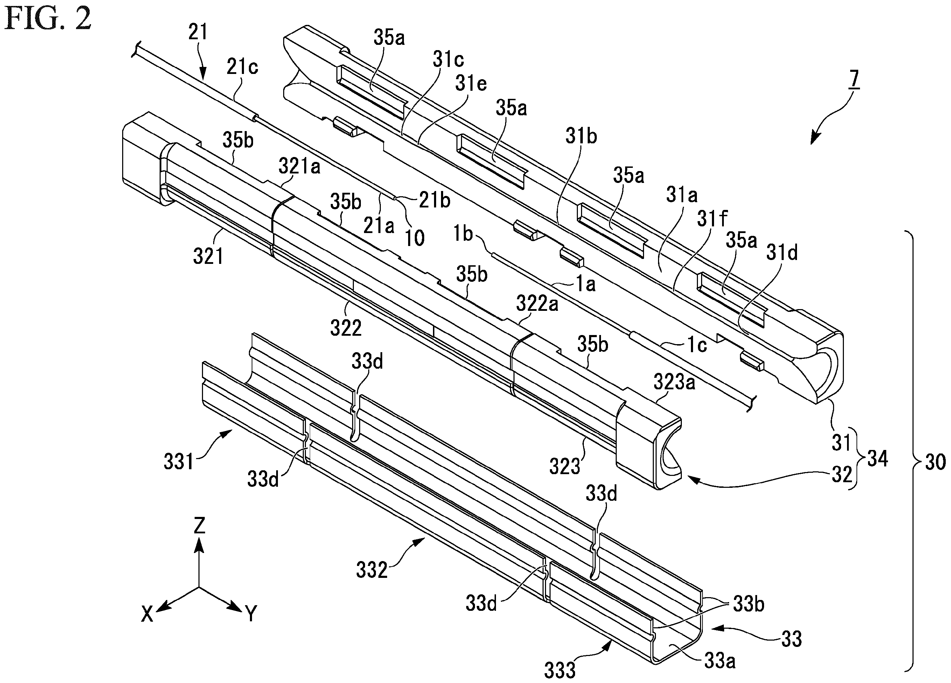

As shown in FIG. 2, the splicer 30 has: an elongated plate-shaped base member 31; a hold-down lid 32 constituted of three lid member 321, 322, and 323 (lid elements) that are arranged and provided in a longitudinal direction of the base member 31; and an elongated clamp spring 33 that elastically applies a force to the base member and the lid in a direction in which these members become closer to each other. The base member 31 (base element) and the lid members 321, 322, and 323 constitute a half-divided holding member 34.

The splicer 30 can butt-joint and hold the receiving optical fiber 21 and the external optical fiber 1 to each other.

The receiving optical fiber 21 and the external optical fibers 1 are coated optical fiber, such as optical core fibers or optical fiber strands. In the shown example, single-core optical fibers are adopted as the receiving optical fiber 21 and the external optical fiber 1.

The receiving optical fiber 21 is formed by coating a bare optical fiber 21a with a coating 21c. Similarly, the external optical fiber 1 is formed by coating a bare optical fiber 1a with a coating 1c. On a connection end side of the receiving optical fiber 21 and the external optical fiber 1, the coatings 21 and 1c are removed and the bare optical fibers 21a and 1a are led out. The butt-jointing between the receiving optical fiber 21 and the external optical fiber 1 in the optical fiber splicing structure 7 is realized by butt-jointing end faces 1b and 21b of the bare optical fiber 1a of the external optical fiber 1 and the bare optical fiber 21a of the receiving optical fiber 21 to each other.

In addition, in the optical fiber splicing structure 7 according to the embodiment, the bare optical fiber 21a of the receiving optical fiber 21 is an optical fiber having a plurality of air holes that are continuous in a waveguide direction, that is, a holey fiber, (HF, hole-assisted fiber (HAF), or the like, whereas the bare optical fiber 1a of the external optical fiber 1 is a single mode optical fiber (SMF)) that does not have air holes.

The splicer 30 will be described with the side (-Y side) where the receiving optical fiber 21 in the longitudinal direction of the splicer is inserted being defined as the "rear" and the side (+Y side) which is opposite to the (+Y side) and where the external optical fiber 1 is inserted being defined as "front".

As shown as an exploded view in FIG. 2, the hold-down lid 32 of the splicer 30 consists of the three lid members (lid elements). A lid member 321 located on a rearmost side among the lid members (lid elements) 321, 322, and 323 is also referred to as a rear lid member, and a lid member 323 located on a foremost side is also referred to as a front lid member. A lid member 322 located between the rear lid member 321 and the front lid member 323 is also referred to as a middle lid member.

As shown in FIG. 2, a facing surface 31a that faces the lid members 321, 322, and 323 is formed in the base member 31 of the splicer 30 over the entire length thereof in the longitudinal direction. An alignment groove 31b running along the longitudinal direction of the base member 31 is formed in the facing surface 31 a. The alignment groove 31b is formed in a portion of the facing surface 31 a of the base member 31 that faces the middle lid member 322.

The alignment groove 31b positions and aligns the bare optical fiber 21a led out to a tip of the receiving optical fiber 21 and the bare optical fiber 1a led out to a tip of the external optical fiber 1 with high precision such that the fibers are capable of being butt-jointed to each other. Although the alignment groove 31b is a V-groove (a groove having a V-shape in cross-section) in the splicing structure 7 according to the embodiment, the alignment groove 31b is not limited to the V-groove, and may be, for example, a groove having a semicircular section, a U-groove (a groove having a U-shape in cross-section), or the like.

Covering-portion insertion grooves 31c and 31d with a greater groove width than that of the alignment groove 31b are respectively formed in a portion of the facing surface 31a that faces the rear lid member 321 and a portion of the facing surface 31a that faces the front lid member 323. The covering-portion insertion grooves 31c and 31d are formed on both sides of the alignment groove 31b in the longitudinal direction of the base member 31 so as to extend in the longitudinal direction of the base member 31.

Taper grooves 31e and 31f, which are formed in a tapered shape and have the groove width that becomes smaller in the direction from the covering-portion insertion grooves 31c and 31d toward the alignment groove 31b, are formed between the covering-portion insertion grooves 31c and 31d and the alignment groove 31b. The covering-portion insertion grooves 31c and 31d communicate with the alignment groove 31b with the taper grooves 31e and 31f interposed therebetween.

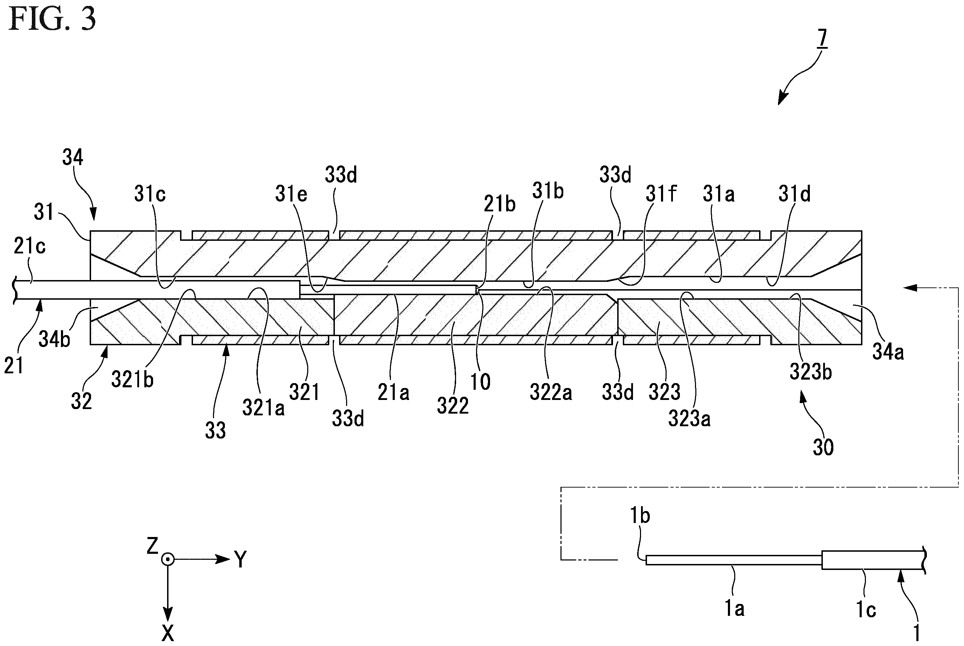

As shown in FIG. 3, a covering-portion insertion groove 323b into which an covering portion of the external optical fiber 1 is inserted is formed at a position corresponding to the covering-portion insertion groove 31d of the base member 31, in the facing surface 323a of the front lid member 323.

Similarly, a covering-portion insertion groove 321b into which a covering portion of the external optical fiber 1 is inserted is formed at a position corresponding to the covering-portion insertion groove 31c of the base member 31, in the facing surface 321 a of the rear lid member 321.

A tapered opening 34b including a recess formed in a tapered shape such that it become closer a rear side from a front end face of each of the front lid member 323 and the base member 31 opens in each of the front lid member 323 and the base member 31 at a front end of the half-divided holding member 34 of the splicer 30. A rear end (deep end) of the tapered opening 34a communicates with the covering-portion insertion grooves 323b and 31d.

A tapered opening 34a including a recess formed in a tapered shape such that it become closer a front side from a rear end face of each of the rear lid member 321 and the base member 31 opens in each of the rear lid member 321 and the base member 31 at a rear end of the half-divided holding member 34 of the splicer 30. A front end (deep end) of the tapered opening 34b communicates with the covering-portion insertion grooves 321b and 31c.

As shown in FIG. 2, the clamp spring 33 is obtained by forming one metal plate in a U-shape in cross-section, and has a configuration in which side plate portions 33b are formed so as to overhang perpendicularly to a back plate portion 33a that is formed in an elongated-plate shape, over the entire length of the back plate portion 33a in the longitudinal direction from both sides of the back plate portion 33a.

The base member 31 and the three lid members 321, 322, and 323 of the splicer 30 are held between the pair of side plate portions 33b in an orientation in which the facing surfaces 31a, 321a, 322a, and 323a that face each other become substantially perpendicular to a spacing direction of the pair of side plate portions 33b of the clamp spring 33.

One of the pair of side plate portions 33b comes into contact with the base member 31, and the other side plate portion 33b comes into contact with the hold-down lid 32 (lid members 321, 322, and 323).

The pair of side plate portions 33b of the clamp spring 33 is divided into three portions corresponding to the three lid members 321, 322, and 323 of the hold-down lid 32 of the splicer 30 by two slit portions 33d. The clamp spring 33 has a first clamp spring 331 that holds the rear lid member 321 and the base member 31, a second clamp spring 332 that holds the middle lid member 322 and the base member 31, and a third clamp spring 333 that holds the front lid member 323 and the base member 31.

As shown in FIG. 2, interposing-piece insertion grooves 35a are formed in four places in the longitudinal direction on the opposite side (hereinafter, an open side) to the back plate portion 33a of the clamp spring 33, in the facing surface 31a of the base member 31. Additionally, interposing-piece insertion grooves 35b are also formed in the hold-down lid 32 (lid members 321, 322, and 323) that faces the four interposing-piece insertion grooves 35a.

As shown in FIG. 1, the interposing-piece insertion grooves 35a and 35b constitute an interposing-piece insertion hole 35 by the base member 31 and the hold-down lid 32 being superimposed on each other.

By inserting an interposing piece (not shown) having a greater width than the width of the interposing-piece insertion hole 35 into the interposing-piece insertion hole 35, the base member 31 and the hold-down lid 32 interposed in the clamp spring 33 can be opened, and the facing surface 31a and the facing surfaces 321a, 322a, and 323a can be separated from each other.

It is desirable to perform insertion of the receiving optical fiber 21 and the external optical fiber 1 into the splicer 30, in a state where the interposing piece is inserted into the interposing-piece insertion hole 35 and the base member 31 and the hold-down lid 32 are open.

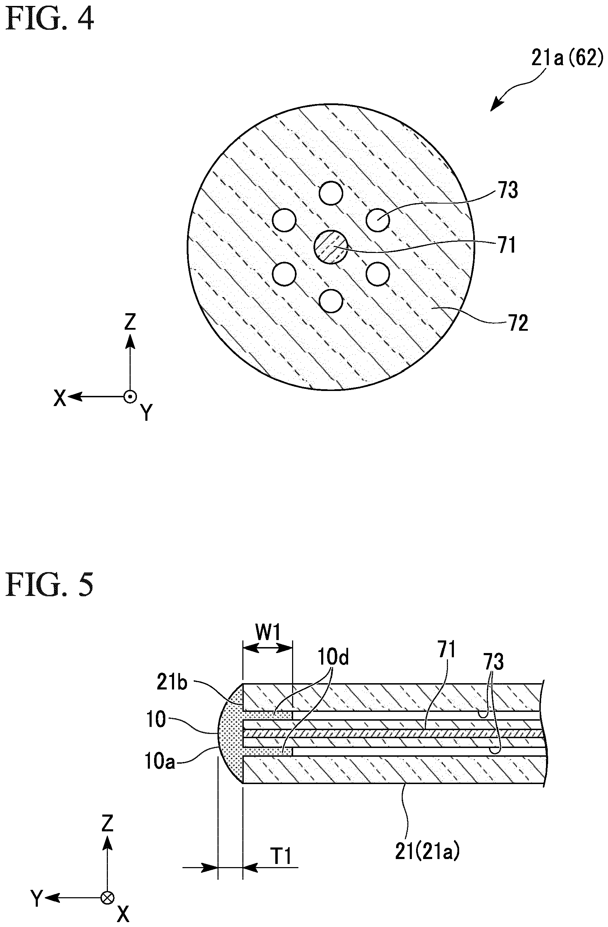

FIG. 4 is a cross-sectional view showing a holey fiber that is available as the bare optical fiber 21a of the receiving optical fiber 21.

The bare optical fiber 21a (holey fiber) includes a core 71 and a cladding 72 surrounding the periphery of the core, and a plurality of air holes 73 (hole) that extend in the longitudinal direction of the bare optical fiber 21a and open to the end face 21b are formed within the cladding 72. The air holes 73 are, for example, concentrically arranged with respect to the core 71. The number or arrangement of the air holes 73 is not limited to the shown example. The holey fiber, for example, can enhance the light confinement effect of the optical fiber, and can reduce bending loss.

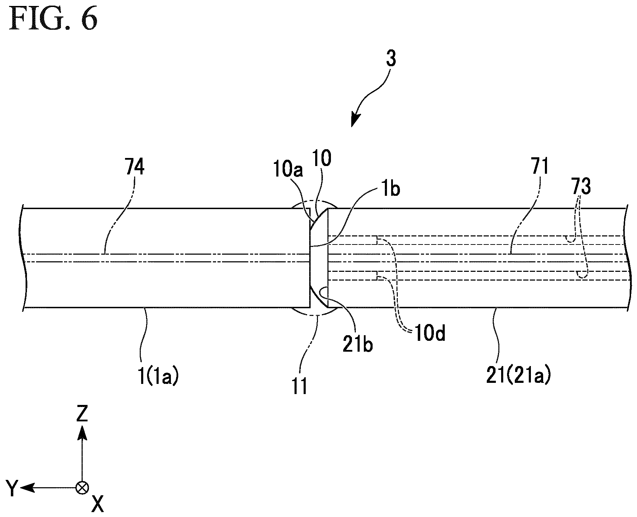

FIG. 5 is a cross-sectional view showing the periphery of the end face 21b (the end face in the +Y direction) of the connection end of the receiving optical fiber 21. Additionally, FIG. 6 is an enlarged view showing a state of a connection portion 3 between the receiving optical fiber 21 and the external optical fiber 1.

The end face 21b of the receiving optical fiber 21 is provided with a solid refractive index matching layer 10. A portion of the solid refractive index matching layer 10 enters the air holes 73 by a depth W1 from the rear end face 21b to form entering portions 10d. The end face 21b of the receiving optical fiber 21 and the end face 1b of the external optical fiber 1 are butt-jointed to each other with the refractive index matching layer 10 interposed therebetween.

The refractive index matching layer 10 enters the air holes 73 to form the entering portions 10d, so that an anchoring effect resulting from the entering portions 10d is exhibited, and the refractive index matching layer 10 is less likely to easily peel off from the end face 21b of the receiving optical fiber 21. That is, even in the case where a load is applied to the refractive index matching layer 10 from the outside and the refractive index matching layer 10 is to be peeled off from the end face 21b, since the entering portions 10d enter the insides of the air holes 73 and are bonded to inner peripheral surfaces of the air holes 73, the entering holes do not easily peel.

It is preferable that an entering depth W1 (that is, a Y-direction length of the entering portions 10d) of the refractive index matching layer 10, which enters the air holes 73, from the end face 21b be 50 µm or less. Although the optical properties of the receiving optical fiber 21 near the end face 21b vary due to the air holes 73 being filled with the entering portions 10d of the refractive index matching layer 10, the optical properties is hardly influenced if the entering depth W1 is 50 µm or less.

Additionally, if the refractive index matching layers 10 enter the air holes 73 even a little, the anchoring effect can enhance a peeling force. However, it is more preferable that the entering depth W1 be 5 µm or more. By setting the entering depth to 5 µm or more, peeling can be more effectively inhibited.

Since the refractive index matching layer 10 covers the air holes 73 together with the end face 21b of the receiving optical fiber 21, water can be prevented from entering through the air holes 73, for example, when the splicing structure 7 is exposed to moisture. If moisture enters the air holes 73 of the holey fiber that is adopted as the receiving optical fiber 21, there is a concern that the optical properties may vary in light transmission paths.

The splicing structure 7 can perform optical transmission more accurately without allowing entering of moisture into the air holes 73 of the receiving optical fiber 21.

In addition, in the splicing structure 7 according to the embodiment, the solid refractive index matching layer 10 and a liquid refractive index matching material 11, such as silicone-based grease, can be used together. The refractive index matching agent 11 in this case is shown by a virtual line in FIG. 6.

Conventionally, in the case where one or both of a pair of optical fibers to be connected to each other are holey fibers, generally, the liquid refractive index matching material 11 was not used to connect the optical fibers each other. This is because there is a concern that the liquid refractive index matching material 11 may enter air holes from an end face of a holey fiber, and the optical properties of the optical fiber near a connection portion may deteriorate.

In the splicing structure 7 according to the embodiment, since the refractive index matching layer 10 covers the air holes 73 of the receiving optical fiber 21, the liquid refractive index matching material 11, such as silicone-based grease, can be used.

By using the liquid refractive index matching material 11, even if a gap that is less than or equal to 20 µm is formed between a connection-end-side surface 10a of the solid refractive index matching layer 10 and the end face 1b of the external optical fiber 1 that faces the connection-end-side surface 10a, this gap can be filled up. Accordingly, the connection loss can be cancelled even if the butt-jointing is insufficient.

In addition, in the splicing structure 7 according to the embodiment, the receiving optical fiber 21 is a holey fiber in which the plurality of the air holes 73 that extend over the entire length of the fiber are formed. However the receiving optical fiber 21 is not limited to this. For example, the air holes 73 that extend over the entire length from the end face 21b may be replaced with holes that open to the end face 21b and are formed with a predetermined depth. That is, holes for allowing the refractive index matching layer 10 to enter thereinto just have to be formed.

The refractive index matching layer 10 has high refractive index matchability (the degree of near proximity between the refractive index of the refractive index matching layer 10 and the refractive indexes of the optical fibers 1 and 21) with the receiving optical fiber 21 and the external optical fiber 1. Although it is preferable that the refractive index of the refractive index matching layer 10 be closer to the refractive indexes of the optical fibers 1 and 21, the difference of the refractive index of the refractive index matching layer 10 from that of the optical fibers 1 and 21 is preferably less than or equal to ±0.1 and more preferably is less than or equal to ±0.05, from the point of view of transmission loss reduction resulting from avoidance of the Fresnel reflection. In the case where the refractive indexes of the two optical fibers 1 and 21 which are to be butt-jointed to each other are different from each other, it is desirable that a difference between an average value of the refractive indexes of the optical fibers 1 and 21 and the refractive index of the refractive index matching layer 10 be within the above range.

It is preferable that the refractive index matching layer 10 be elastically deformable.

Materials used to form the refractive index matching layer 10 may include, for example, polymeric materials based on acryl, epoxy, vinyl, silicone, rubber, urethane, metaacryl, nylon, bisphenol, diol, polyimide, fluorinated epoxy, and fluorinated acryl.

Although the refractive index matching layer 10 may be formed in a layered shape having a constant thickness, it is preferable to adopt a shape of which the thickness is gradually reduced in the direction from the center of the end face 21b toward a peripheral edge thereof. For example, in the refractive index matching layer 10, as shown in FIG. 5, the surface 10a (the surface of the refractive index matching layer 10 formed in the +Y direction) can be a convexly curved surface (for example, a spherical surface or an elliptical spherical surface) that protrudes rearward. The surface 10a may be a convexly curved surface in its entirety, or may be a convexly curved surface only partially. By adopting the convexly curved surface as the surface 10a, the core 74 at the center of a tip face of the external optical fiber 1 to be butt-jointed to the receiving optical fiber 21 can be reliably in contact with the refractive index matching layer 10, and the connection loss can be favorable.

The refractive index matching layer 10 can be formed over the entire surface of the end face 21b of the receiving optical fiber 21. Additionally, the refractive index matching layer 10 may be formed to reach not only the end face 21b but also an outer peripheral surface of the receiving optical fiber 21.

The refractive index matching layer 10 can be formed by, for example, the following method.

The refractive index matching layer 10 is obtained by causing the end face 21b to come close to the liquid level of a refractive index matching material in a liquid state, in a state where the receiving optical fiber 21 is charged, and by adsorbing (attach) the refractive index matching material in a liquid state onto the end face 21b of the receiving optical fiber 21, and thereafter curing the refractive index matching material. Additionally, the end face 21b may be purified using discharge, prior to the formation of the refractive index matching layer 10.

In addition, the refractive index matching layer 10 can also be formed by coating the refractive index matching material in a liquid state on the end face 21 b using other methods, without being limited to a method of electrically adsorbing the refractive index matching material in a liquid state.

In the case where the refractive index matching material in a liquid state is cured to form the refractive index matching layer 10 as described above, the refractive index matching material in a liquid state adsorbed or coated on the end face 21b of the receiving optical fiber 21 enters the air holes 73 automatically due to a capillary phenomenon. Accordingly, the entering portions 10d can be easily formed.

The entering depth W1 of the entering portions 10d of the refractive index matching layer 10 can be determined to be a suitable depth by finely adjusting the air pressure of the air holes 73 opening at the end face opposite to the connection end of the receiving optical fiber 21. Additionally, the entering depth W1 resulting from the capillary phenomenon can be controlled by adjusting the viscosity of the liquid refractive index matching material before curing.

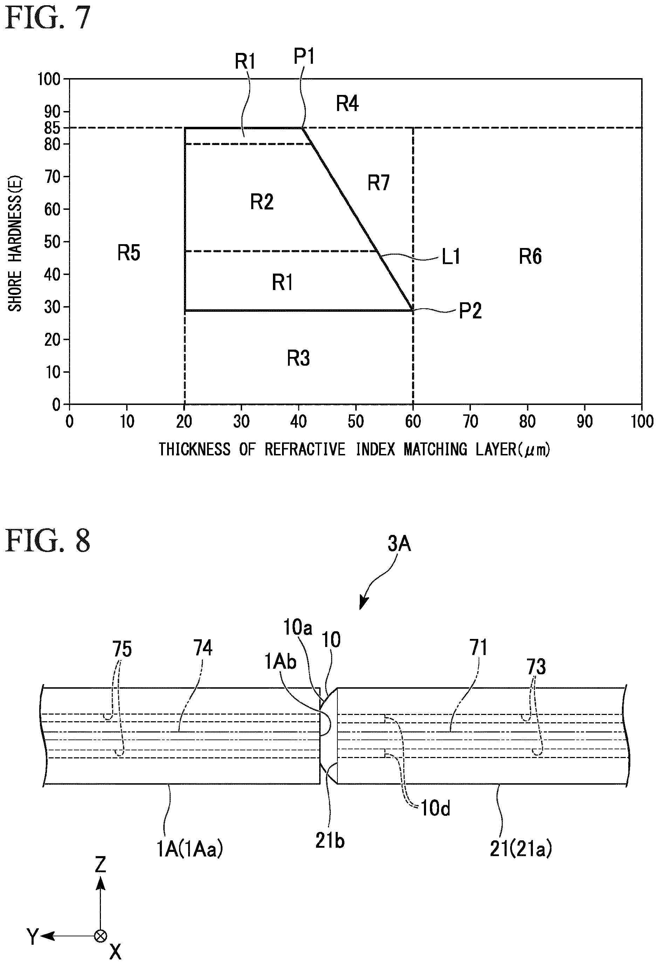

A graph showing a relationship between a preferable thickness T1 (refer to FIG. 4) and a preferable shore E hardness (JIS K it is based on 6253) of the refractive index matching layer 10 is shown in FIG. 7.

In FIG. 7, regions shown as regions R1 and R2 are preferable ranges, and a range shown as the region R2 out of these regions is also a more preferable range.

As shown in FIG. 7, it is preferable that the shore E hardness of the refractive index matching layer 10 be 6 to 85.

If the shore E hardness of the refractive index matching layer 10 is too low, the refractive index matching layer 10 easily peels off from the end face 21b of the receiving optical fiber 21. In the optical fiber splicing structure 7 according to the embodiment, the end face 21b of the receiving optical fiber 21 that is a holey fiber is provided with the refractive index matching layer 10. Since the refractive index matching layer 10 enters the insides of the air holes 73, the entering portions 10d exhibits the anchoring effect, and peeling of the refractive index matching layer 10 is less likely to occur. Consequently, the refractive index matching layer 10 in a region where the shore E hardness is low can be used, and the refractive index matching layer 10 in a region where the shore E hardness is 6 or more can be used.

If the shore E hardness is 6 or more, the refractive index matching layer 10 can be prevented from being peeled off from the end face 21b, even in the case where a force is applied to the refractive index matching layer 10, for example, due to variation in temperature or humidity within an alignment groove 69a, a load from the outside, or the like.

Additionally, by setting the shore E hardness of the refractive index matching layer 10 to 6 or more, deformation, such as wrinkle formation causing an increase in loss, can be prevented from occurring in the refractive index matching layer 10 or the like.

If the shore E hardness of the refractive index matching layer 10 is too high (for example, in a region R4), since the viscosity of the refractive index matching material at the time of uncuring (in a liquid state) becomes high, it becomes difficult to attach the refractive index matching material to the end face 21b of the receiving optical fiber 21. By setting the shore E hardness to 85 or less, operation of cause the refractive index matching material at the time of un-curing to be adhered to the end face 21b becomes easy, and can form precisely the refractive index matching layer 10 having a predetermined shape (for example, a shape that forms the above-mentioned convexly curved surface).

Additionally, by setting the shore E hardness of the refractive index matching layer 10 to 85 or less, sufficient deformation to follow the end faces 21b and 1b of the receiving optical fiber 21 and the external optical fiber 1 can be realized. For this reason, even in the case where a force is applied to the refractive index matching layer 10, for example, due to variation in temperature or humidity within the alignment groove 69a, a load from the outside, or the like, a gap or the like causing an increase in loss can be avoided from occurring.

It is preferable that the thickness T1 of the refractive index matching layer 10 be 20 µm to 60 µm.

The thickness T1 of the refractive index matching layer 10 is, for example, the thickness of a central portion of the refractive index matching layer 10, and is a maximum thickness. In addition, the case where the refractive index matching layer 10 is formed with a uniform thickness, the thickness T1 means the uniform thickness of the refractive index matching layer 10.

If the refractive index matching layer 10 is too thin (for example, in a region R5), the effects as the refractive index matching layer 10 cannot be exhibited when the distance between the end faces 21b and 1b of the receiving optical fiber 21 and the external optical fiber 1 which are which are to be butt-jointed to each other become large. If the thickness is set to 20 µm or more, it is advantageous because the effects as the refractive index matching layer 10 are reliably obtained.

Additionally, by setting the thickness to 20 µm or more, sufficient deformation to follow the end faces 21b and 1b of the receiving optical fiber 21 and the external optical fiber 1 which are to be butt-jointed to each other can be realized, and a gap or the like causing an increase in loss can be avoided from occurring.

If the refractive index matching layer 10 is too thick (for example, in a region R6), the positions of the end faces 21b and 1b of the receiving optical fiber 21 and the external optical fiber 1 which are to be butt-jointed to each other are not stabilized, and initial properties tend to vary easily.

Additionally, since unstabilization of the positions of the end faces of the optical fibers is influenced by the hardness of the refractive index matching layer 10, there is a concern that the unstabilization of the positions of the end faces of the above-mentioned optical fibers may occur in a region R7 having a greater thickness than a straight line L1 connecting a point P1 where the shore E hardness is 85 and the thickness is 40 µm, and a point P2 where the shore E hardness is 30 and the thickness is 60 µm.

Hence, within a range bounded by a region where the shore E hardness of the refractive index matching layer 10 is 6 to 85 and the region is 20 µm to 60 µm, and regions excluding a region R7, that is, (a region where the shore E hardness is 6 and the thickness is 20 µm), (a region where the shore E hardness is 85 and the thickness is 20 µm), (a region where the shore E hardness is 85, the thickness is 40 µm), (a region where the shore E hardness is 30 and the thickness is 60 µm), and a region where the shore E hardness is 6 and the thickness is 60 µm, peeling of the refractive index matching layer 10 can be prevented, the refractive index matching layer 10 can be precisely formed, the initial properties can be stabilized, and the connection loss can be reliably maintained low.

A connection portion 3A in a modified example of the splicing structure 7 according to the embodiment is shown in FIG. 8. In this modified example, the holey fibers can be adopted not only as the receiving optical fiber 21 but also as the bare optical fiber 1Aa of the external optical fiber 1A.

In the splicing structure 7 having the connection portion 3A, the connection loss can be low in the region R2 where the shore E hardness is 45 to 80, within the region R1 shown in FIG. 7.

Regarding the reasons that the connection loss can be favorable due to the use of the refractive index matching layer 10 in the region R2, the next consideration is possible.

As shown in FIG. 8, the core 74 located at the center of a cross-section of the external optical fiber 1A and a plurality of air holes 75 that pass through the core 74 and are provided around the core 74 are formed in the external optical fiber 1A that is a holey fiber. In the case where the external optical fiber 1A is such a holey fiber, the surface 10a of the refractive index matching layer 10 has a shape that has irregularities according to an end face 1Ab having the air holes 75 due to the butt-jointing thereof to the receiving optical fiber 21. Therefore, the refractive index matching layer 10 is less likely to slide and move with respect to the end face 1Ab in the direction thereof.

In the case where the hardness of the refractive index matching layer 10 is too low (in the case where the shore E hardness is less than 45), if axial deviation is adjusted after the receiving optical fiber 21 and the external optical fiber 1A are butt-jointed to each other within the alignment groove 69a, there is a concern that a large shearing force in a planar direction is applied to the refractive index matching layer 10 by the end face 1Ab of the external optical fiber 1A and deformation, such as wrinkle formation causing an increase in loss, may occur.

In contrast, in the case where the hardness of the refractive index matching layer 10 is too high (in the case where the shore E hardness exceeds 80), there is a concern that sufficient following deformation in the case of the positional adjustment of the end faces of the optical fibers within the alignment groove 69a cannot be realized and a gap or the like causing an increase in loss may occur.

On the other hand, if the refractive index matching layer 10 in the region R2 (the shore E hardness is 45 to 80) is used, sufficient deformation to follow the end faces of the optical fibers of which the positions are to be adjusted can be realized. Therefore, a gap or the like causing an increase in loss does not occur, and deformation, such as wrinkle formation, is less likely to occur. Accordingly, the connection loss can be low.

### (Second Embodiment)

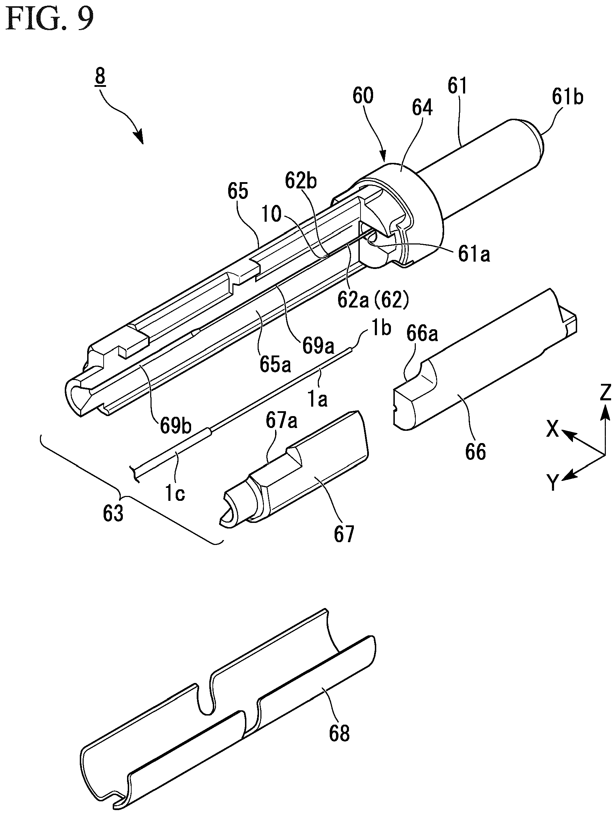

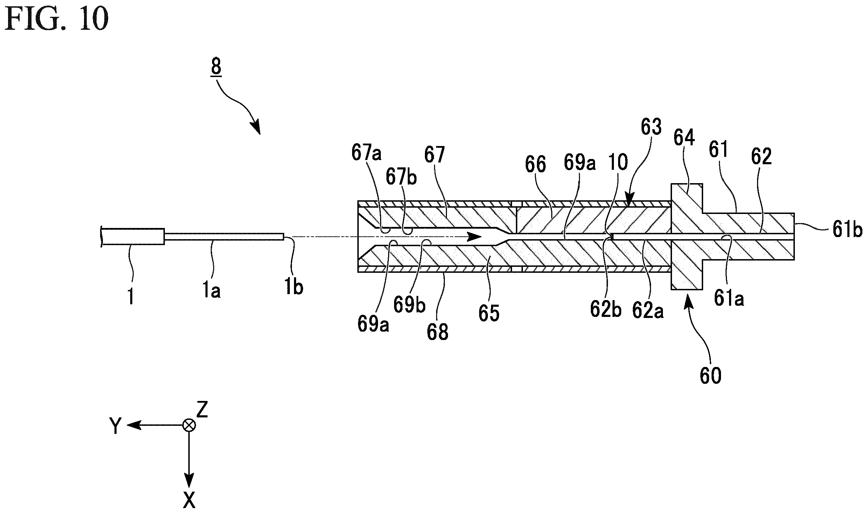

FIGS. 9 and 10 are explanatory views showing an optical fiber splicing structure 8 according to a second embodiment of the invention. Although the optical fiber splicing structure 8 according to the second embodiment will be described below, the same constituent elements as those of the above-described first embodiment will be designated by the same reference signs, and the description thereof will be omitted.

The optical fiber splicing structure 8 has a clamp-attached ferrule 60 serving as an optical fiber connector, a receiving optical fiber 62, and the external optical fiber 1.

As shown in FIGS. 9 and 10, the clamp-attached ferrule 60 is obtained by assembling a clamp 63 (connection mechanism) on a rear side of the ferrule 61 into which the receiving optical fiber 62 is internally inserted and fixed. The clamp 63 is configured to hold and fix a rear-side protruding portion 62a of the receiving optical fiber 62 and a front-end portion of the external optical fiber 1 inserted from the rear side and butt-jointed to a rear end of the receiving optical fiber 62, and maintain a butt-jointing connected state between the optical fiber 1 and 62.

The clamp 63 includes a base member 65 (a rear-side extending piece, a base element) and lid members 66 and 67 (lid elements) that extend from a flange 64 of the ferrule 61 to the rear side, and a clamp spring 68 that collectively holds these members therein.

The clamp 63 can sandwich the rear-side protruding portion 62a of the receiving optical fiber 62, and the front-end portion of the optical fiber 2 butt-jointed to a rear end receiving optical fiber 62, between the base member 65 and the lid members 66 and 67 and hold and fix these portions.

The receiving optical fiber 62 is inserted into a fiber hole 61 a that is a fine hole provided to pass through the ferrule 61, and it is fixed to the ferrule 61 by bonding and fixing using an adhesive, or the like. An end face of a front end of the receiving optical fiber 62 is exposed to a joining end face 61b of a tip (front end) of the ferrule 61.

The flange 64 that are provided around (provided to protrude from) an outer periphery of a rear end portion of the ferrule 61 is integrated with the rear end portion of the ferrule 61.

The clamp 63 has a configuration in which the rear-side extending piece 65 extending to the rear side of the ferrule 61 and the lid members 66 and 67 are collected held inside the clamp spring 68 from the flange 64.

The alignment groove 69a that positions the rear-side protruding portion 62a of the receiving optical fiber 62 on a rear extension of the fiber hole 61 a of the ferrule 61, and a covering portion housing groove 69b that extends rearward from a rear end of alignment groove 69a are formed in a facing surface 65a (groove-forming surface) that face the lid members 66 and 67 of the rear-side extending piece 65.

The covering portion housing groove 69c (refer to FIG. 10) is formed in the facing surface 67a of the rear lid member 67 so as to extend to a position corresponding to the covering portion housing groove 69b of the rear-side extending piece 65.

A flat facing surface 66a that faces the facing surface 65 a of the rear-side extending piece 65 is formed in the front lid member 66.

The receiving optical fiber 62 is, for example, a bare optical fiber. Additionally, the receiving optical fiber 62 is the holey fiber that is the same as the bare optical fiber 21a of the receiving optical fiber 21 shown in FIG. 4. Consequently, the receiving optical fiber 62 has the air holes 73 that extend over the entire length thereof in the longitudinal direction.

The external optical fiber 1 from which the coating 1c is removed is led out to the connection end side of the bare optical fiber 1a. In addition, although the bare optical fiber 1a of the external optical fiber 1 is an optical fiber that does not have holes similar to the first embodiment, the bare optical fiber may be a holey fiber in which holes are formed.

The solid refractive index matching layer 10 is formed in an end face 62b, to which the end face 1b of the external optical fiber 1 is to be butt-jointed, out of the end faces of the receiving optical fiber 62.

The end face 1b of the external optical fiber 1 is butt-jointed to the end face 62b of the receiving optical fiber 62 with the refractive index matching layer 10 interposed therebetween (is brought into the same state as the connection portion 3 of FIG. 6, or the connection portion 3A of FIG. 8).

The refractive index matching layer 10 formed on the end face 62b of the receiving optical fiber 62 is less likely to peel off from the end face 62b of the receiving optical fiber 62 because the refractive index matching layer 10 exhibits the anchoring effect in which it enters the air holes 73. That is, the splicing structure 8 according to the second embodiment can do exhibit the same effects as the splicing structure 7 according to the first embodiment.

### (Modified Example)

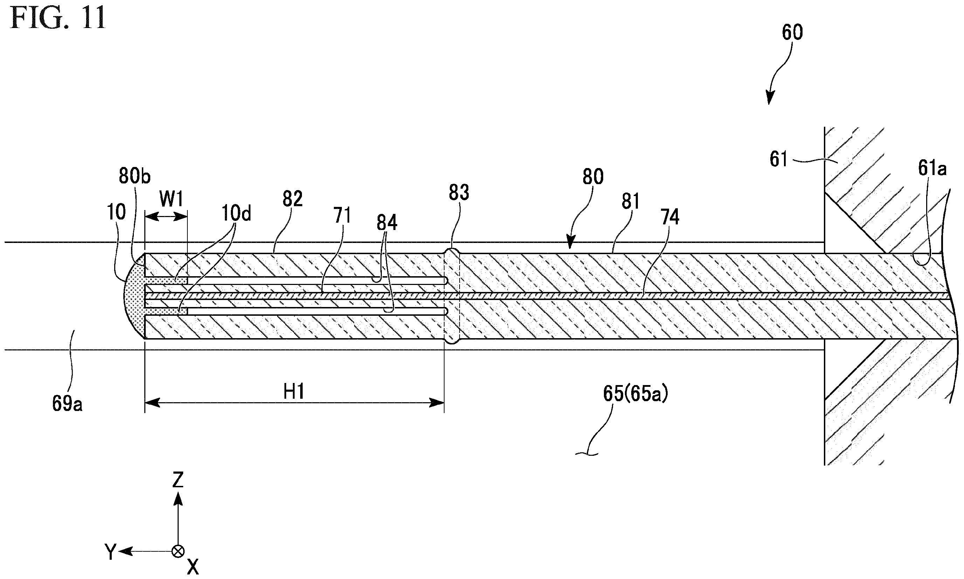

Next, as a modified example of the second embodiment, a structure in which a receiving optical fiber 80 is adopted as the optical fiber splicing structure 8 according to the second embodiment will be described with reference to FIG. 11. This modified example is different from the above-described second embodiment in that the receiving optical fiber 80 is adopted, and the other constituent elements will be designated by the same reference signs and a description thereof will be omitted.

FIG. 11 is a plan view showing the clamp-attached ferrule 60 into which the receiving optical fiber 80 is inserted.

Holes 84 having a depth HI from an end face 80b on a connection side are formed in the receiving optical fiber 80. The receiving optical fiber 80 has a hole portion 82 in a region with a length H1 in the longitudinal direction from the end face 80b on the connection side, and a non-hole portion 81 located opposite to the connection side from the hole portion 82. That is, the holes 84 are formed in the region having the depth HI from the end face 80b of the receiving optical fiber 80.

Such a receiving optical fiber 80 can be formed by fusing a holey fiber (for example, a hole-assisted fiber (HAF)) and an optical fiber (for example, a single-mode fiber (SMF)) that does not have holes to each other.

First, these optical fibers having sufficient length are fused and connected to each other at end faces thereof. In this connecting process, a fused portion 83 that swells in a diameter direction is formed in a connection portion between the respective optical fibers. By cutting the holey fiber having the length H1 from this fused portion 83, the receiving optical fiber 80 including the holes 84 having the depth HI is formed on the end face 80b.

The solid refractive index matching layer 10 is provided on the end face 80b of the receiving optical fiber 80. A portion of the solid refractive index matching layer 10 enters the holes 84 by the depth W1 (50 µm or less) from the end face 80b to form the entering portions 10d.

As shown in FIG. 11, the receiving optical fiber 80 is inserted into and bonded and fixed to the fiber hole 61a of the ferrule 61 from the base member 65. In this case, it is preferable that the fused portion 83 of the receiving optical fiber 80 is not inserted into the fiber hole 61a.

The fused portion of the receiving optical fiber 80 has weak strength. Additionally, the fused portion 83 of the receiving optical fiber 80 is formed to swell in the diameter direction of the receiving optical fiber 80. For this reason, if an attempt to be inserted into the fiber hole 61a is made, there is a concern that the swelling of the fused portion 83 may interfere with the fiber hole 61a and the receiving optical fiber 80 may be cut at the fused portion 83. In addition, there is a concern that a stress may be applied to the fused portion 83 and the receiving optical fiber 80 may be damaged in the fused portion, due to contraction at the time of curing of an adhesive to be used in the bonding between the fiber hole 61a and the receiving optical fiber 80.

In order for the fused portion 83 not to be inserted into the fiber hole 61a, it is preferable that the fused portion 83 be formed at a position of 4 mm or less from the end face 80b of the receiving optical fiber 80. That is, it is preferable that the length HI of a region where the hole portion 82 be provided is 4 mm or less. Since the end face 80b of the receiving optical fiber 80 is provided at a position of 5 mm or more from an inlet portion of the fiber hole 61 a, the fused portion 83 is not inserted into the fiber hole 61a by setting the length H1 of the hole portion 82 to 4 mm or less.

In the modified example, by forming the hole portion on the connection side of the optical fiber that do not have holes, the refractive index matching layer 10 enters the holes 84 to form the entering portions 10d. The entering portions of the refractive index matching layer 10 do not easily peel off from the end face 80b of the receiving optical fiber 80 by virtue of the anchoring effect. That is, even in the case where a load is applied to the refractive index matching layer 10 from the outside and the refractive index matching layer 10 is to be peeled off from the end face 80b, since the entering portions 10d enter the insides of the poles 84 and are bonded to inner peripheral surfaces of the air holes, the refractive index matching layer does not easily peel.

Although the embodiments of the invention have been described above, the respective components in the embodiments, combinations thereof, or the like are exemplary. Additions, omissions, substitutions, and other modifications of the components can be made without departing from the spirit of the invention.

Additionally, the invention is not limited by the embodiments.

### DESCRIPTION OF REFERENCE NUMERAL

1, 1A: EXTERNAL OPTICAL FIBER
1Aa, 1a, 21a: BARE OPTICAL FIBER
1Ab, 1b, 21b, 62b, 80b: END FACE
3, 3A: CONNECTION PORTION
3A: CONNECTION PORTION
7,8: OPTICAL FIBER SPLICING STRUCTURE
10: REFRACTIVE INDEX MATCHING LAYER
10d: ENTERING PORTION
11: REFRACTIVE INDEX MATCHING AGENT
21, 62, 80: RECEIVING OPTICAL FIBER
30: MECHANICAL SPLICE (SPLICER)
31, 65: BASE MEMBER (REAR-SIDE EXTENDING PIECE, BASE ELEMENT)
32: HOLD-DOWN LID (LID ELEMENT)
33, 68: CLAMP SPRING
60: CLAMP-ATTACHED FERRULE
61: FERRULE
61A: FIBER HOLE
63: CLAMP
66, 67: LID MEMBER (LID ELEMENT)
73, 75, 84: AIR HOLE (HOLE)
81: NON-HOLE PORTION
82: HOLE PORTION
83: FUSED PORTION
T1: THICKNESS
W1: ENTERING DEPTH

## Claims

1. An optical fiber splicing structure comprising:
an optical fiber connector that is capable of holding an optical fiber at both sides thereof in a radial direction;
a receiving optical fiber that is provided inside the optical fiber connector and has a hole opening at an end face of a connection end thereof;
a solid refractive index matching layer that is formed at the end face of the connection end of the receiving optical fiber and enters the hole; and
an external optical fiber that is to be butt-jointed to the receiving optical fiber by being butt-jointed to the receiving optical fiber at the end faces thereof with the refractive index matching layer interposed therebetween.

2. The optical fiber splicing structure according to claim 1, wherein
an entering depth of the refractive index matching layer that enters the hole is 50 µm or less from an end face of the connection end of the receiving optical fiber.

3. The optical fiber splicing structure according to claim 1 or 2, wherein
the receiving optical fiber is a holey fiber in which the hole is formed over the entire length of the receiving optical fiber.

4. The optical fiber splicing structure according to claim 1 or 2, wherein
the receiving optical fiber comprises: a non-hole portion that does not comprise holes; and a hole portion that is located closer to the connection end than the non-hole portion and has the hole extending from an end face of the connection end.

5. The optical fiber splicing structure according to claim 4, wherein
the hole portion is provided in a region of 4 mm or less from an end face of the connection end.

6. The optical fiber splicing structure according to any one of claims 1 to 5,
wherein
a shore E hardness and a thickness of the refractive index matching layer are within a range bounded by (shore E hardness: 6 and thickness: 20 µm), (shore E hardness: 85 and thickness: 20 µm), (shore E hardness: 85, thickness: 40 µm), (shore E hardness: 30 and thickness: 60 µm), and (shore E hardness: 6 and thickness: 60 µm).

7. The optical fiber splicing structure according to any one of claims 1 to 6,
wherein
the external optical fiber is a holey fiber, and the shore E hardness of the refractive index matching layer is within a range of 45 to 80.

8. The optical fiber splicing structure according to any one of claims 1 to 6,
wherein
a liquid refractive index matching material together with the refractive index matching layer is interposed between end faces of the receiving optical fiber and the external optical fiber.

9. The optical fiber splicing structure according to any one of claims 1 to 8,
wherein
the optical fiber connector is a mechanical splice that comprises: a base element and a lid element that are arranged to face each other and sandwich the receiving optical fiber and the external optical fiber therebetween; and a clamp spring that elastically applies a force to the base element and the lid element in a direction in which the base element and the lid element become closer to each other.

10. The optical fiber splicing structure according to any one of claims 1 to 8, whe
rein
the optical fiber connector is an optical connector that comprises: a ferrule comprising the receiving optical fiber inserted thereinto and fixed thereto; a base element and a lid element that are provided on a rear side of the ferrule, are arranged to face each other, and sandwich the receiving optical fiber and the external optical fiber therebetween; and a clamp spring that elastically applies a force to the base element and the lid element in a direction in which the base element and the lid element become closer to each other.
